Europäisches Patentamt

European Patent Office

Office européen des brevets

(11) Veröffentlichungsnummer: **0 184 174 B1**

# EUROPÄISCHE PATENTSCHRIFT

(45) Veröffentlichungstag der Patentschrift: **26.02.92**

(21) Anmeldenummer: **85115266.0**

(22) Anmeldetag: **02.12.85**

(51) Int. Cl.⁵: **F27B 13/12**, F27B 9/36, C04B 33/32, F23B 5/00

(54) **Verfahren zum Brennen von oxidierbare Bestandteile enthaltenden Materialien in einem Brennofen.**

(30) Priorität: **06.12.84 DE 3444535**

(43) Veröffentlichungstag der Anmeldung:
**11.06.86 Patentblatt 86/24**

(45) Bekanntmachung des Hinweises auf die
Patenterteilung:
**26.02.92 Patentblatt 92/09**

(84) Benannte Vertragsstaaten:
**BE DE FR GB IT NL**

(56) Entgegenhaltungen:
**EP-A- 0 021 768**
**EP-A- 0 050 105**
**FR-A- 1 355 797**
**GB-A- 2 046 415**
**GB-A- 2 056 640**

(73) Patentinhaber: **Linde Aktiengesellschaft**
**Abraham-Lincoln-Strasse 21**
**W-6200 Wiesbaden(DE)**

(72) Erfinder: **Rossmann, Manfred, Dr.-Ing.**
**Schaffhauser Strasse 6**
**W-8000 München 71(DE)**
Erfinder: **Vocke, Peter, Dr.-Ing.**
**Merzstrasse 6**
**W-8000 München 80(DE)**

(74) Vertreter: **Schaefer, Gerhard, Dr.**
**Linde Aktiengesellschaft Zentrale Patentab-**
**teilung**
**W-8023 Höllriegelskreuth(DE)**

## Beschreibung

Die Erfindung betrifft ein Verfahren zum Brennen von Brenngut in einem Brennofen, bei dem zur Beheizung ein Brennstoff mittels Brenner eingeleitet und zusammen mit im Ofen vorhandenem Sauerstoff verbrannt wird, wobei zusätzlich im Bereich der Brenner Sauerstoff oder sauerstoffangereicherte Luft in den Bodenbereich des Brennofens eingeleitet wird.

Beispielsweise ist aus der GB-A 2 056 640 ein verwandtes Verfahren bekannt, bei dem benachbart zu den Heizbrennern Sauerstoff in einen Brennofen eingeleitet wird, welcher dort insbesondere zur Beschleunigung der Oxidation des Brennguts dient.

Ebenso um die Oxidation der in den Tonwaren enthaltenen, oxidierbaren Bestandteile zu beschleunigen, ist es aus der EP-0 021 768 B1 bekannt, beim Brennen von Tonwaren in Tunnelöfen, die mit Erdgasbrennern beheizt werden, sauerstoffreiches Gas zwischen benachbarte Warenstapel einzuleiten.

Es ist auch bekannt, z.B. beim Brennen von Ziegeln, Klinker und sonstigen grob- und feinkeramischem Material, daß Gas oder Öl als Brennstoff verwendet wird und der Brennstoff mit Hilfe mehrerer Brenner, die durch die Ofendecke hindurchreichen, nur mit dem im Ofen vorhandenen Sauerstoff verbrannt wird. Auf diese Weise wird aber der Deckenbereich des Ofens stärker erwärmt als Bodenbereich. Dies führt dazu, daß das zu brennende Material im Bodenbereich des Ofens geringeren Temperaturen als im Deckenbereich ausgesetzt ist. Das für eine gleichartige Qualität aller gebrannten Artikel wesentliche, gleichmäßige Erwärmen der Artikel über die gesamte Querschnittsfläche des Ofens ist auf diese Weise nicht möglich.

Zudem ist bekannt, die Verbrennung des Brennstoffes durch Zufuhr sauerstoffangereicherter Luft zum Brenner zu unterstützen. Diese Maßnahme führt allerdings ebenfalls zu einer starken Erwärmung des Deckenbereiches.

Weiters ist diesbezüglich bekannt, Gas über einen Impulsbrenner nur phasenweise zuzugeben. Das heißt, einem Brenner einer Brennergruppe wird, von einem Relais gesteuert, Brennstoff nur phasenweise zugeleitet. Auf diese Weise sowie durch bestimmte Brennereinstellung wird angestrebt, die Ausbildung einer heißen Zone im Deckenbereich des Ofens zu minimieren und eine Verlagerung der heißen Zone in tiefere Bereiche des Ofens zu erzielen, jedoch hat diese Verfahrensweise den Nachteil, daß das Sauerstoffangebot in der heißen Zone vermindert wird. Gerade beim Brennen von Ton- und Keramikwaren ist aber ein Mindestangebot an Sauerstoff für ein Oxidieren der organischen Bestandteile wesentlich. Es gilt also sowohl gute Oxidationsbedingungen als auch eine gleichmäßige Erwärmung in einem Ofen herzustellen.

Der Erfindung liegt daher die Aufgabe zugrunde, ein Verfahren der eingangs geschilderten Art anzugeben, das ein gleichmäßiges Aufheizen des Brenngutes bei guten Oxidationsbedingungen ermöglicht.

Diese Aufgabe wird erfindungsgemäß dadurch gelöst, daß daß das Sauerstoffgas und der Brennstoff abwechselnd zugeführt werden, derart daß der Sauerstoff oder die sauerstoffangereicherte Luft nur während einer Brennstoffzufuhrpause in den Bodenbereich des Brennofens eingeleitet wird, oder, bei Impulsbrennerbetrieb des Brennofens, die Einleitung nur während der Totzeit eines Impulsbrenners durch diesen Impulsbrenner durchgeführt wird.

Es wurde festgestellt, daß durch die intervallweise Eindüsung von Sauerstoff oder sauerstoffangereicherter Luft im Bodenbereich des Brennofens unterhalb der Brenner eine Zone geschaffen werden kann, in der die Sauerstoffkonzentration erheblich größer als die Sauerstoffkonzentration im Deckenbereich, in dem die Brenner angeordnet sind, ist. Wird Brennstoff in den Ofen eingeleitet, so verbrennt der Brennstoff vorzugsweise im Bodenbereich des Ofens. Auf diese Weise wird im Bodenbereich des Ofens eine Zone geschaffen, in der eine höhere Temperatur herrscht als in den benachbarten Bereichen. Durch die natürliche Thermik steigen die heißen Verbrennungsgase neben der horizontalen Strömung zum Kamin auch vertikal nach oben und durchströmen die üblicherweise in Form von Stapeln angeordnete, zu brennende Ware. Verlief bei herkömmlichen Verfahren die von der Zone hoher Temperatur zur Zone tiefer Temperatur gerichtete Querströmung in der Regel in vertikaler Richtung nach unten, so wird die Richtung der Querströmung durch das erfindungsgemäße Verfahren umgekehrt. Mit dem vorgeschlagenen Verfahren gelingt es nun aber nicht nur, im Bodenbereich eine Zone hoher Temperatur zu schaffen, die eine natürliche thermische Querströmung verursacht, vielmehr gelingt es gleichzeitig auch, in der Zone hoher Temperatur das größte Sauerstoffangebot zu konzentrieren. Dem Ofen wird nämlich eine größere Sauerstoffmenge zugeführt, als zur Verbrennung des Brennstoffes erforderlich ist. Sauerstoff, der an der Verbrennung nicht beteiligt ist, wandert somit mit hoher Temperatur durch die Spalten zwischen dem Brenngut zur Ofendecke empor. An der Stelle, an der bei bisherigen Verfahren der geringste Sauerstoffgehalt vorlag, wird durch das erfindungsgemäße Verfahren eine Zone geschaffen, die sich nicht nur durch hohe Temperatur sondern auch durch eine hohe Sauerstoffkonzentration auszeichnet. Durch die sich von selbst einstellende heiße Querströmung vom Boden- zum Deckenbereich wird das zu brennende Material optimal, d.h. bei optimaler Temperatur und optimalem Sauerstoffangebot gebrannt. Auf diese Weise werden die üblicherweise in Form von Stapeln zusammengefaßten Materialien optimal erwärmt und mit Sauerstoff versorgt.

Wesentliche Merkmale des erfindungsgemäßen Verfahrens sind also die Schaffung einer natürlichen thermischen Querströmung und die Gewährleistung eines hohen Sauerstoffangebotes.

Je größer die Konzentration an Sauerstoff im Bodenhereich des Ofen ist, desto ausgeprägter sind diese Merkmale des erfindungsgemäßen Verfahrens. Nach einer vorteilhaften Ausgestaltung der Erfindung findet daher sauerstoffangereicherte Luft, die wenigstens einen Sauerstoffgehalt von 30 Vol.% hat, Anwendung, vorzugsweise jedoch sauerstoffangereicherte Luft mit einem deutlich höheren Sauerstoffgehalt. Die höchste Konzentration ist natürlich beim Einleiten von Sauerstoff (100 Vol.%) zu erzielen. Aus wirtschaftlichen Gründen wird bevorzugt technischer Sauerstoff verwendet.

In einer Variante der Erfindung wird Sauerstoff bzw. sauerstoffangereicherte Luft über einen Impulsbrenner während dessen Totzeit in den Bodenbereich des Brennofens geleitet. Eine Impulsbrennergruppe wird dabei z.B. so gesteuert, daß immer nur einem Brenner Brenngas zugeführt wird. Bei z.B. 10 Brennern und einer Impulsdauer von 3 Sekunden führt jeder Brenner 2 x 3 sec/min Gas. Für 2 x 27 sec/min steht der Brenner bei herkömmlichen Verfahren still. In dieser Totzeit wird beim erfindungsgemäßen Verfahren Sauerstoff bzw. sauerstoffangereicherte Luft in den Ofen geleitet.

Das erfindungsgemäße Verfahren eignet sich besonders für das Brennen von Material, das zu oxidierende organische Substanzen enthält. Mit besonderem Vorteil wird das erfindungsgemäße Verfahren daher beim Brennen von groben und und feinen Ton- oder Keramikwaren angewendet, die in Form von Stapeln durch einen Tunnelofen bewegt werden. Hierbei wird durch die gezielte Querströmung von unten nach oben eine bessere Durchgasung der Stapel erreicht. Bei gleichzeitig erhöhtem und heißerem Sauerstoffangebot wird die Sauerstoffdiffusion in das zu brennende Gut beschleunigt. Dadurch werden die organischen Substanzen des Tones schneller oxidiert, wodurch die Qualität und/oder die Leistung des Ofens erhöht werden kann.

Im folgenden sollen anhand zweier schematischer Skizzen Ausführungsbeispiele der Erfindung erläutert werden.

In den beiden Figuren sind zwei verschiedene Zufuhrsysteme für Brennstoff und Sauerstoff bzw. sauerstoffhaltiges Gas dargestellt.

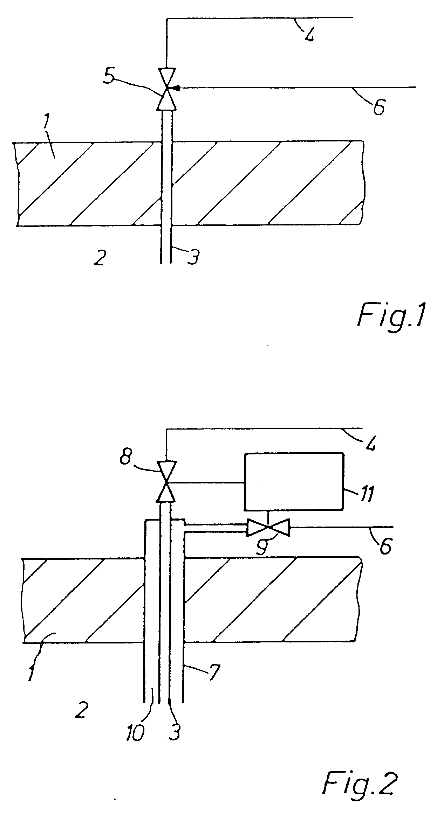

Figur 1 zeigt schematisch einen Ausschnitt aus der Decke 1 eines Tunnelofens mit Sauerstoff- und Brenngaszuleitung. In den Ofeninnenraum 2 werden abwechselnd Brenngas und Sauerstoff über einen schematisch dargestellten Impulsbrenner 3 eingeleitet. Während eines Zeitintervalls von z.B. einigen Sekunden wird Brenngas über eine Versorgungsleitung 4, ein Dreiwegventil 5 und den Impulsbrenner 3 in den Ofeninnenraum 2 geleitet. Während dieses Zeitintervalls ist die Zufuhr von Sauerstoff über eine Leitung 6 durch das Dreiwegventil 5 versperrt. Nach Ablauf des Zeitintervalls wird die Zufuhr von Brenngas mit Hilfe des Dreiwegventils 5 abgesperrt und die Zufuhr von Sauerstoff freigegeben. Dieser sammelt sich im Bodenbereich des Ofens an und verbrennt zusammen mit nachfolgend eingeleitetem Brenngas vorzugsweise im Bodenbereich des Ofens.

In Figur 2 ist ebenfalls ein Ausschnitt aus der Decke 1 eines Tunnelofens wiederum mit Gaszufuhr schematisch dargestellt. Die Zufuhrleitung 4 für Brenngas mündet über ein Ventil 8 in die nur für die Brenngaszufuhr vorgesehene Leitung 3. Diese Leitung ist koaxial von einem Keramikrohr 7 umgeben. In den Ringraum 10 zwischen Keramikrohr 7 und Leitung 3 mündet die Versorgungsleitung für Sauerstoff 6. In der Sauerstoffversorgungsleitung ist ebenfalls ein Ventil 9 angeordnet. Von einem Steuergerät 11 wird der Betrieb geregelt. Brenngas und Sauerstoff werden wiederum abwechselnd in den Ofen geleitet.

Zu Materialien, die oxidierbare Bestandteile enthalten, zählen nicht nur grob- und feinkeramische Materialien wie Ziegel, Klinker, Dachpfannen, Spalt- und Fußbodenplatten, Fliesen, Blumenschalen, Kacheln usw., sondern auch Steinzeug, SiC-Platten und dergleichen.

**Patentansprüche**

1. Verfahren zum Brennen von Brenngut in einem Brennofen, bei dem zur Beheizung ein Brennstoff mittels Brenner eingeleitet und zusammen mit im Ofen vorhandenem Sauerstoff verbrannt wird,

   wobei zusätzlich im Bereich der Brenner Sauerstoff oder sauerstoffangereicherte Luft in den Bodenbereich des Brennofens eingeleitet wird, dadurch gekennzeichnet, daß das Sauerstoffgas und der Brennstoff abwechselnd zugeführt werden, derart daß der Sauerstoff oder die sauerstoffangereicherte Luft nur während einer Brennstoffzufuhrpause in den Bodenbereich des Brennofens eingeleitet wird,

   oder, bei Impulsbrennerbetrieb des Brennofens, die Einleitung nur während der Totzeit eines Impulsbrenners durch diesen Impulsbrenner durchgeführt wird.

**2.** Anwendung des Verfahrens nach Anspruch 1 auf das Brennen von Ton- und Keramikwaren im Brennraum eines Tunnelofens.

## Claims

**1.** A method of firing material to be fired in a kiln, wherein for heating purposes a fuel is introduced by means of burners and is burned together with oxygen present in the kiln, wherein additionally, in the region of the burners, oxygen or air enriched with oxygen is introduced into the base zone of the kiln, characterised in that the oxygen gas and the fuel are supplied alternately in such manner that the oxygen or the air enriched with oxygen is introduced into the base zone of the kiln only during a fuel supply pause or, in the event that the kiln is operated using pulsed burners, the oxygen is introduced only during the idle time of a pulsed burner, by means of this pulsed burner.

**2.** The application of the method claimed in Claim 1 to the firing of clay and ceramic goods in the firing chamber of a tunnel furnace.

## Revendications

**1.** Procédé de cuisson d'articles dans un four, dans lequel pour le chauffage, un combustible est introduit par un brûleur et est brûlé avec de l'oxygène présent dans le four, et dans lequel, en outre, est introduit de l'oxygène, dans le voisinage du brûleur, ou de l'air enrichi en oxygène, dans la zone de base du four, caractérisé en ce que l'oxygène gazeux et le combustible sont chargés en alternance, de sorte que l'oxygène ou l'air enrichi en oxygène ne soit introduit dans la zone de base du four que pendant les arrêts d'alimentation en combustible, ou, en cas de fonctionnement par impulsions des brûleurs du four, l'introduction ne se fait par un brûleur pulsé que pendant le temps mort de ce brûleur.

**2.** Utilisation du procédé selon la revendication 1, pour la cuisson d'articles en argile ou en céramique dans l'enceinte de cuisson d'un four tunnel.

EP 0 184 174 B1

*Fig.1*

*Fig.2*

5